# EUROPEAN PATENT APPLICATION

(11) **EP 4 597 330 A1**
(43) Date of publication of application: **06.08.2025**
(21) Application number: 25154693.3
(22) Date of filing: 29.01.2025
(51) Int. Cl.: G06F 15/80

(54) **SYSTEM AND METHODS FOR MULTI-POD INTER-CHIP INTERCONNECT**

(30) Priority: 30.01.2024 US 202418426749
(71) Applicant: Google LLC, Mountain View, CA 94043 (US)
(72) Inventor: DESHPANDE, Akash, Mountain View, 94043 (US); JOUPPI, Norman Paul, Mountain View, 94043 (US); TOWLES, Brian Patrick, Mountain View, 94043 (US)
(74) Representative: Betten & Resch

(57) **Abstract**

The technology generally relates to systems and methods for operating a distributed processing network. Tensor Processing Units (TPUs) may be interconnected to one another as part of a TPU cluster or pod. A number of TPU clusters may be connected to one another via inter-cluster switches to form a distributed network of TPU clusters. The inter-cluster switches may be configured to efficiently direct data transmissions from a first TPU cluster to a second TPU cluster based on identification of the data transmission's final destination and performing next-hop lookup operations. The inter-cluster switches may also be configured to perform cutthrough operations and may be configured to have an internal non-blocking connectivity.

## Description

### BACKGROUND

Tensor processing units (TPUs) can be configured to support distributed computing within a cluster or pod of TPUs, wherein processing is distributed over hundreds or thousands of TPUs over an inter-chip interconnect (ICI). The size of a TPU cluster is governed by attributes of the ICI span, and while TPU clusters can perform processing intensive operations, a single TPU cluster may be insufficient for some applications. In addition, power availability and other constraints may limit the placement of TPU clusters in a given location. In addition, currently available architectures for processor networking fail to provide the necessary bandwidth and data transmission efficiency.

### BRIEF SUMMARY

What is needed are improved systems and methods for performing distributed processing over a plurality of TPU clusters. In accordance with aspects of the disclosure, multiple TPU clusters can be networked together via inter-cluster switches that are optically connected to one another. Each inter-cluster switch may be configured to communicate with a TPU cluster, and the ports of the inter-cluster switch may be configured to support full bandwidth with respect to the data transmissions between the TPU cluster and the inter-cluster switch.

In addition, the inter-cluster switches may be configured to efficiently direct data transmissions through the TPU cluster network. For example, upon receiving a data transmission from a TPU cluster the inter-cluster switch may identify the final destination (TPU and TPU cluster) to which the data transmission is directed, and the inter-cluster switch may determine if an efficient and available data path exists for the data transmission. This data path may be based on determining the next TPU within the next TPU cluster that will result in the least amount of latency, as the data transmission continues within the network of TPU clusters. The next TPU of the next TPU cluster may be referred to as the next hop within the data path of the data transmission. Upon determining the next hop for the data transmission, the inter-cluster switch may perform a cut-through operation, in which a portion of the data transmission is provided to an output port prior to all of the data transmission being received by the inter-cluster switch. In addition, the inter-cluster switch may transfer a data transmission from an input port to an output port via a non-blocking switching fabric, which can include a plurality of non-blocking sub-switching layers.

In accordance with an aspect of the disclosure, a system for a distributed data processing network may comprise: a plurality of tensor processing unit (TPU) clusters, each TPU cluster having a plurality of interconnected tensor processing units (TPUs); a plurality of inter-cluster switches, wherein each inter-cluster switch is configured to transmit data between two TPU clusters from the plurality of TPU clusters. In addition a first interconnected TPU of a first TPU cluster may be configured to direct a data transmission to a second TPU that is part of a second TPU cluster. A first inter-cluster switch, from the plurality of inter-cluster switches, may also be configured to: receive the data transmission; identify TPU destination information for the data transmission; select an available output data path, from a plurality of output data paths, based on the TPU destination information; and while receiving the data transmission, provide a portion of the data transmission to the available output data path.

In accordance with other aspects of the disclosure, the available output data path may be one of a plurality of output data paths, and each output data path may be associated with an external TPU that is part of an external TPU cluster that is different than the first TPU cluster.

In accordance with still other aspects of the disclosure, the first inter-cluster switch may be further configured to place received data from the data transmission into an input buffer, and the TPU destination information may be identified from the received data prior to receiving all of the data transmission. In addition, the TPU destination information may include a first set of bits identifying the second TPU cluster and a second set of bits identifying the second TPU.

In accordance with yet other aspects of the disclosure, the inter-cluster switch may be configured to identify the available output data path by accessing a next-hop lookup that identifies a plurality of potential output paths by latency with respect to the TPU destination information. In addition, selecting the available output data path may be based on identification of a potential output path from the next-hop lookup that is not currently busy. Also, the inter-cluster switch may be configured to access a data-path usage table to determine whether one or more of the plurality of potential output paths are busy, and selecting the available output data path may be based on the available output data having the lowest latency of the potential output data paths that are not identified as busy within the data-path usage table.

In accordance with other aspects of the disclosure, the first inter-cluster switch may be configured to have a non-blocking internal connectivity for the plurality of output data paths with respect to a plurality of input data paths. In addition, the output path may correspond to an intermediate TPU within an intermediate TPU cluster, and the data transmission may be provided by the intermediate TPU cluster to a second inter-cluster switch. The second inter-cluster switch may be configured to: receive the data transmission; identify the TPU destination information for the data transmission; select a second output data path, from a plurality of output data paths within the second inter-cluster switch, based on the TPU destination information; and while receiving the data transmission, provide a portion of the data transmission to the second output data path.

In accordance with still other aspects of the disclosure, a method for distributed data processing may comprise: directing a data transmission by a first TPU within a first TPU cluster to a second TPU within a second TPU cluster, wherein the data transmission includes TPU destination information; receiving the data transmission at an inter-cluster switch; identifying, by the inter-cluster switch, the TPU destination information for the data transmission; determining, by the inter-cluster switch, an available output data path, from a plurality of output data paths, based on the TPU destination information; and while receiving the data transmission, providing a portion of the data transmission to the available output data path.

In accordance with other aspects of the disclosure, the available output data path each output data path may be associated with an external TPU that is part of an external TPU cluster that is different than the first TPU cluster.

In accordance with still other aspects of the disclosure, the method may comprise placing, by the first inter-cluster switch, received data from the data transmission into an input buffer, and the TPU destination information may be identified from the received data prior to receiving all of the data transmission.

In accordance with yet other aspects of the disclosure, identifying the available output data path may further comprise accessing a next-hop lookup that identifies a plurality of potential output paths by latency with respect to the TPU destination information. In addition, selecting the available output data path may be based on identification of a potential output path from the next-hop lookup that is not currently busy. Also, the method may include accessing, by the first inter-cluster switch, a data-path usage table to determine whether one or more of the plurality of potential output paths are busy, and wherein selecting the available output data path may be based on the available output data having the lowest latency of the potential output data paths that are not identified as busy within the data-path usage table.

In accordance with other aspects of the disclosure, the method may comprise providing, by the first inter-cluster switch, the data transmission to the available data path over a plurality of non-blocking sub-switches.

In accordance with still other aspects of the disclosure, the output path may correspond to an intermediate TPU within an intermediate TPU cluster, and the method may further comprise providing the data transmission, by the intermediate TPU cluster, to a second inter-cluster switch. The method may further comprise: receiving the data transmission at the second inter-cluster switch; identifying, by the second inter-cluster switch, the TPU destination information for the data transmission; selecting, by the second inter-cluster switch, a second output data path, from a plurality of output data paths within the second inter-cluster switch, based on the TPU destination information; and while receiving the data transmission, providing, by the second inter-cluster switch, a portion of the data transmission to the second output data path.

### BRIEF DESCRIPTION OF THE DRAWINGS

Figure 1 is a block diagram of a network of TPU clusters in accordance with aspects of the disclosure.
Figure 2 is a block diagram of a portion of the network of TPU clusters in accordance with aspects of the disclosure.
Figure 3 is a block diagram of a TPU assembly having a switching component in accordance with aspects of the disclosure.
Figure 4 is a block diagram of another embodiment of a TPU assembly having a switching component in accordance with aspects of the disclosure.
Figure 5 is a block diagram of inter-cluster switches in accordance with aspects of the disclosure.
Figure 6 is a block diagram of an inter-cluster switch performing data transmission operations in accordance with aspects of the disclosure.
Figure 7 is a block diagram of non-blocking sub-switches in accordance with aspects of the disclosure.

### DETAILED DESCRIPTION

In accordance with aspects of the disclosure, multiple TPU clusters can be networked together via inter-cluster switches that are optically connected to one another. Each inter-cluster switch may be configured to communicate with a TPU cluster, and the ports of the inter-cluster switch may be configured to support efficient data transmissions between the TPU clusters, based on identification of the best data paths for the data transmission to take, as it is sent from one TPU cluster to another.

The technology generally relates to systems and methods for operating a distributed processing network. Tensor Processing Units (TPUs) may be interconnected to one another as part of a TPU cluster or pod. A number of TPU clusters may be connected to one another via inter-cluster switches to form a distributed network of TPU clusters. The inter-cluster switches may be configured to efficiently direct data transmissions from a first TPU cluster to a second TPU cluster based on identification of the data transmission's final destination and performing next-hop lookup operations. The inter-cluster switches may also be configured to perform cut-through operations and may be configured to have an internal non-blocking connectivity.

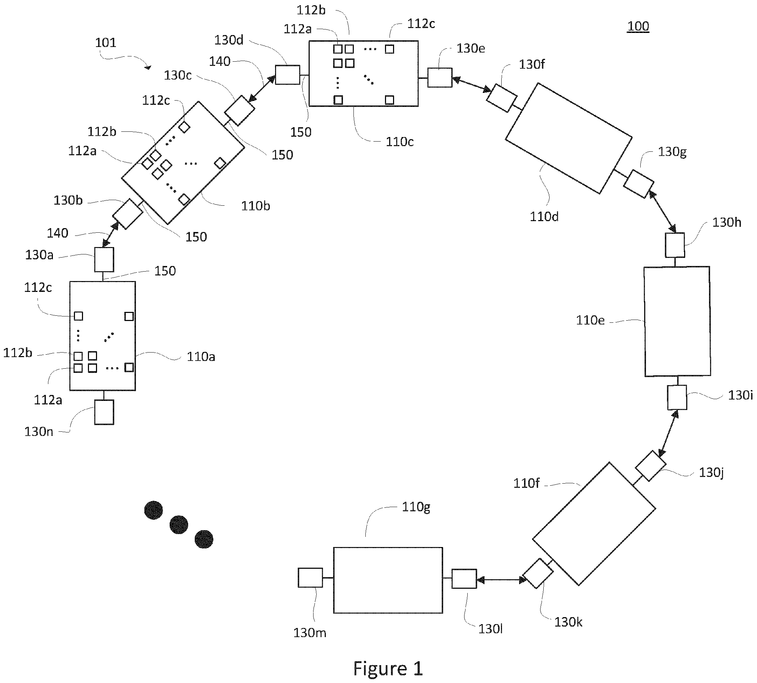

Figure 1 is a block diagram 100 of a system 101 in accordance with aspects of the disclosure. System 101 includes a plurality of TPU clusters 110a-g, with each TPU cluster 110a-g containing a large number of interconnected TPUs 112. Each TPU cluster 110a-g may be connected to other TPU clusters 110a-g within system 101 via inter-cluster switches 130a-n, with each inter-cluster switch 130a-n being connected to a TPU cluster 110a-g so as to be configured to send and receive data transmissions between that inter-cluster switch 130 and the corresponding TPU cluster 110. For example, inter-cluster switches 130a-n may each be connected to one of the TPU cluster 1 10a-g via electrical connection 150. In addition, an inter-cluster switch 130 may be connected to another inter-cluster switch 130 in a manner so as to transmit data between two TPU clusters 110. For example within system 101, each inter-cluster switch 130a-n is connected via an optical connection 140 to another inter-cluster switch 130an.

In block diagram 100, the TPU clusters 110a-g are connected via inter-cluster switches 130a-n so as to form a ring. While block diagram 100 shows seven interconnected TPU clusters 110a-g, system 101 can include any number of interconnected TPU clusters 110. For example, while inter-cluster switch 130m may be optically connected to inter-cluster switch 130n, additional TPU clusters may be interconnected between TPU cluster 110a and 110g. Alternatively, a system of interconnected TPU clusters may have fewer TPU clusters than shown in block diagram 100. While TPU clusters 110a-g of block diagram 100 are shown as forming a ring of TPU clusters, other topologies of interconnected TPU clusters may be created in accordance with aspects of the disclosure. For example, TPU clusters 110 may be interconnected in a manner that generates higher-dimension topologies, such as TPU clusters corresponding to a two-dimensional topology, such as the surface of a torus or sphere.

Each TPU cluster 110a-g may be configured to include more than 4000 TPU chips that are interconnected via a high-bandwidth connection, such as an optical circuit switch that is capable of bandwidths of 800 Gbps to 1.6 Tbps or more. Each TPU cluster 110a-g can be referred to as a TPU pod or a pod of TPUs. The inter-chip interconnect (ICI) network generated within a TPU cluster 110 is capable of supporting direct memory access and transmission of data payloads across distributed TPU memories. The data payloads may be relatively small, such as data transmissions of 32B, but larger data payloads of around 512B or more can be maintained. The TPUs 112 of each TPU cluster 110a-g may be configured to run processing operations using around 200W of power. The optical circuit switch connections (not shown) within each TPU cluster 110a-g may be reconfigurable, so as to reconfigure the interconnect topology of the TPU cluster. Interconnect reconfigurations can be made to improve scale, availability, power, performance, and modularity.

The size of a TPU cluster can be governed by the inter-chip interconnect (ICI) span. Currently, TPU clusters are implemented with an architecture that supports 4096 TPU nodes within a given cluster. While a single TPU cluster 110 may be sufficient for various applications that require high-intensity computing, some applications, such as data processing related training of large-language models or other machine learning architectures, may require more TPU accelerators and related processing than what is available in a single TPU cluster. Given the requirements of a TPU cluster, the placement of TPU clusters may be limited by power availability and other constraints. Thus, the TPU clusters 110a-g may be remotely located from one another and distributed over different geographic locations.

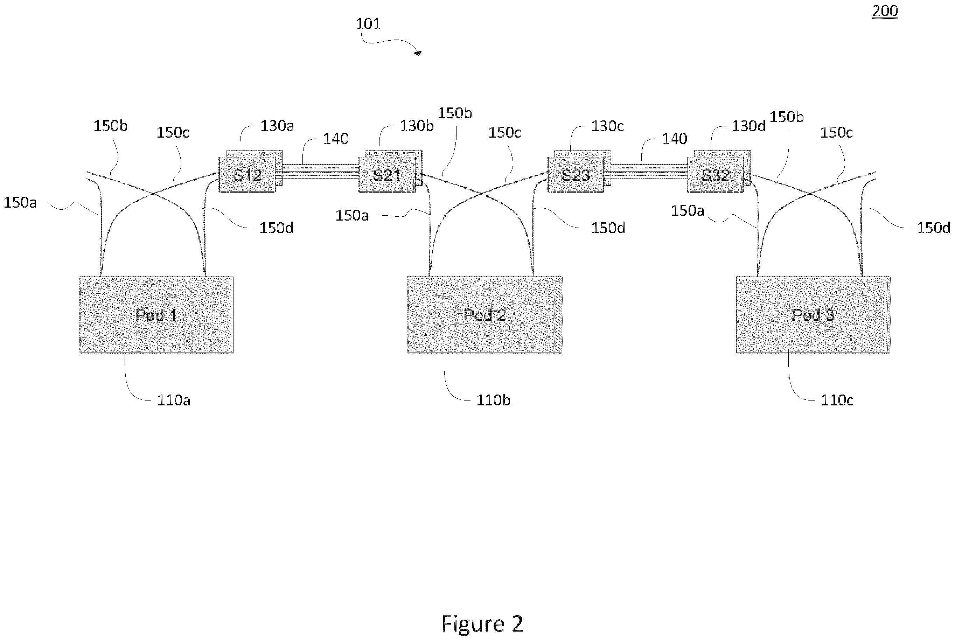

While optical connections 140 and electrical connections 150 are shown block diagram 100 as single connections, these connections may take the form of a plurality of electrical or optical connections. For example, Figure 2 is a block diagram of a portion of system 101 in which the two inter-cluster switches 130a-b and the two inter-cluster switches 130c-d are each optically connected to one another via a plurality of optical connections 140. In addition, each TPU cluster 110a-c is connected to two inter-cluster switches 130, with each inter-cluster switch 130 having an input connection and an output connection. For example, TPU cluster 110b has an input connection 150a and output connection 150b that allow TPU cluster 110b to receive and send, respectively, data transmissions with inter-cluster switch 130b. In addition, input connection 150c and output connection 150d allow TPU cluster 110b to receive and send, respectively, data transmissions with inter-cluster switch 130c. Thus, TPU cluster 110b may communicate with other TPU clusters 110 within the network via either inter-cluster switch 130b or inter-cluster switch 130c. While each inter-cluster switch 130 may constitute a single switch that is configured to accommodate data transmissions from all TPU chips within a given TPU cluster 110, the system 101 may be configured so that an inter-cluster switch 130 includes a plurality of inter-cluster switches, with each inter-cluster switch being configured to support a subset of TPU chips within a TPU cluster 110. For example, TPU cluster 110b may include 4096 TPU chips, and inter-cluster switch 130b may take the form of a plurality of inter-cluster switching devices, with each switch device supporting between 200-400 TPU chips within TPU cluster 110b.

Returning to Figure 1, while each TPU cluster 110a-g is shown being electrically connected to two of the inter-cluster switches 130a-n, Each inter-cluster switch 130a-n may represent more than one inter-cluster switch, with each inter-cluster switch supporting a subset of TPUs 112 within TPU clusters 110a-g. For example, TPU cluster 110a may contain on the order of 4,000 TPUs, and there may be multiple inter-cluster switches 130a that are each configured to support a different subset of around 200-400 TPUs within TPU cluster 110a.

In performing processing operations, TPUs of a given TPU cluster may direct a data transmission to another TPU within the same TPU cluster. This data transmission can be sent over internal ICI connections within the TPU cluster. However, in a distributed network of TPU clusters, a particular TPU may also direct a data transmission to a TPU that resides in a different TPU cluster. For example, returning to Figure 1, TPU 112a of a TPU cluster 110a may direct a data transmission to TPU 112b of TPU cluster 110c. This data transmission may be sent to inter-cluster switch 130a, where it is further directed through inter-cluster switch 130b, TPU cluster 110b, and inter-cluster switches 130c-d, before the data transmission is provided to TPU 112b of TPU cluster 110c.

System 101 may be configured so that the distributed network of TPU clusters 110a-g allows any particular TPU 112 within a first TPU cluster 110 to direct a data transmission to any other TPU 112 within a second TPU cluster 110. In addition, system 101 may be designed so as to allow for dependable and efficient transmission of data between TPU clusters 110a-g. For example, each TPU 112 within each TPU cluster 110a-g may include additional serializer/deserializer (SerDes) connections that support inter-cluster transmissions. The transmissions along these additional SerDes connections can be directed to an inter-cluster switch 130, and the particular inter-cluster switch 130 may be configured to direct the transmission along a data path that will efficiently send the data transmission to the next location within the network of TPU clusters.

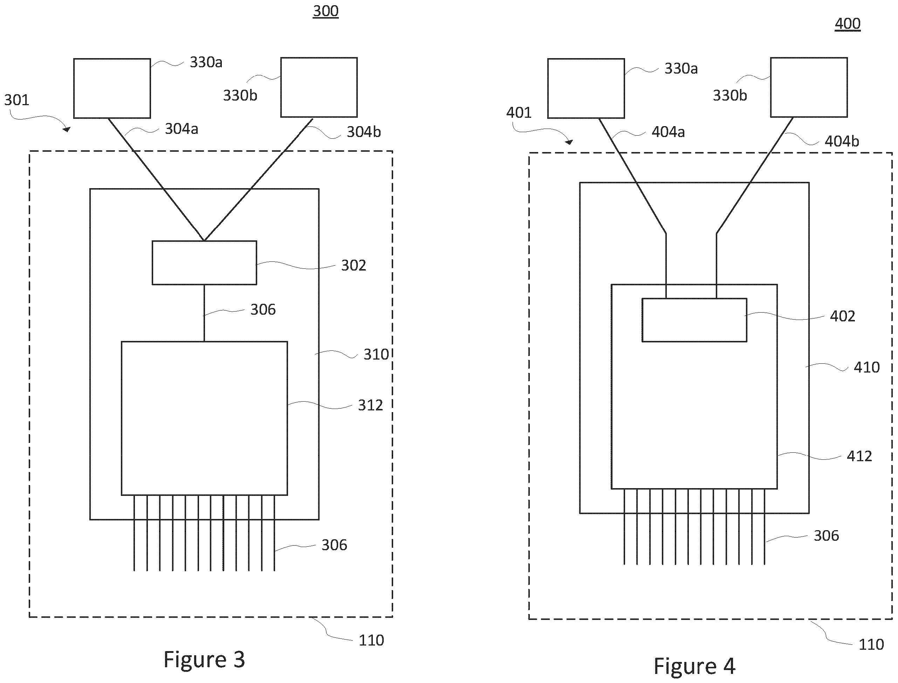

Figure 3 is a block diagram 300 of a TPU assembly 301 that can reside within a TPU cluster 110. For data transmissions within TPU cluster 110, TPU chip 312 may be configured to send the data transmission along one of a plurality of intra-cluster ICI connections 306, so that the data transmission can be provided to another TPU (not shown) within cluster 110 via optical circuit switches (not shown). However, TPU chip 312 may also be configured send data transmissions to TPUs outside of TPU cluster 110, and TPU assembly 301 is configured so that these inter-cluster data transmissions from TPU chip 312 are directed along either a first connection 304a to inter-cluster switch 330a or along a second connection 304b to inter-cluster switch 330b. The data transmission may be directed to either first connection 304a or second connection 304b by switch 302 that resides on board 310 with TPU chip 312, and TPU chip 312 may be connected to switch 302 via ICI connection 306.

Switch 302 may be configured to direct a data transmission from TPU chip 312 along either first connection 304a or second connection 304b based on whether the data transmission is to be provided to inter-cluster switch 330a or 330b, respectively. For example, returning to Figure 1, if TPU 112a of TPU cluster 110a is to provide a data transmission to TPU 112b of TPU cluster 110c, the assembly for TPU 112a of TPU cluster 110a may be configured to direct the data transmission to inter-cluster switch 130a, rather than to inter-cluster switch 130n, as inter-cluster switch 130a provides a more efficient or direct route for the data transmission to TPU cluster 130c. Accordingly, returning to Figure 3, switch 302 may direct a data transmission from TPU chip 312 to either inter-cluster switch 330a or inter-cluster switch 330b based on the topology of the network of TPU clusters in which TPU cluster 110 resides, and based on the final destination of the data transmission.

While block diagram 300 of Figure 3 is a TPU assembly 301 in which switch 302 resides externally from TPU chip 312, the assembly may also be configured so that the TPU chip contains switching components. For example, Figure 4 is a block diagram 400 of a TPU assembly 401 in which switch 402 is a part of the TPU chip 412, rather than residing separately on board 412. As shown in block diagram 400, switch 402 may have electrical connections 404a and 404b to inter-cluster switches 330a and 330b, respectively.

Each TPU assembly 301 or 401 may have electrical connections to more than two inter-cluster switches 330a-b, so as to allow the TPU clusters to be networked into a higher-dimension topology. For example, if TPU cluster 110 is a part of a network in which TPU clusters are connected in accordance with the topology of a torus, TPU cluster 110 may be connected to four inter-cluster switches 330, and switches 302 and 402 of Figures 3 and 4 may each be configured to direct data transmissions to one of four different inter-cluster switches 330.

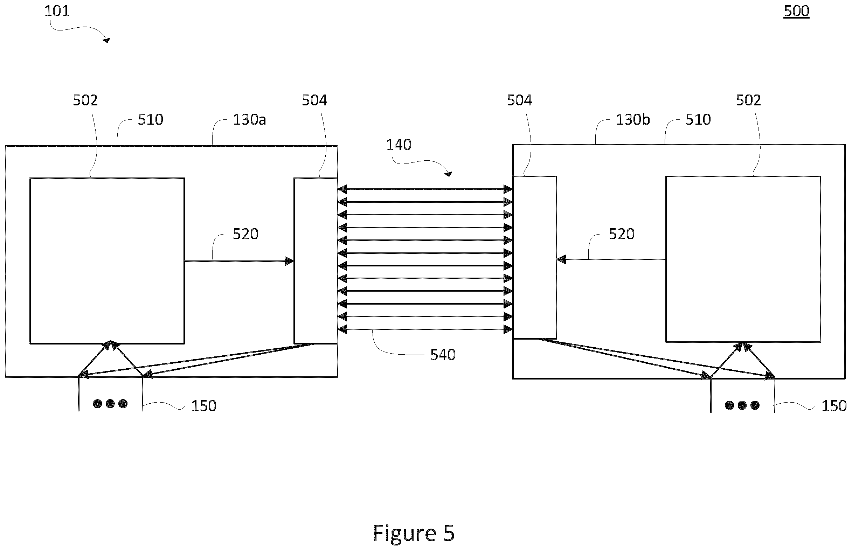

Figure 5 is a block diagram 500 of two inter-cluster switches 130a and 130b within system 101. Inter-cluster switches 130a-b may be configured to be a light-weight switching and optical multiplexing assembly. For example, inter-cluster switches 130a-b may each contain a switching assembly 502, such as a silicon switch, that is configured to receive data transmissions from a TPU cluster (not shown) via a plurality of electrical connections 150. For each data transmission received via electrical connections 150, switching assembly 502 may be configured to determine an available data path and provide the data transmission to an optical multiplexer-demultiplexer (mux-demux) assembly 504 that is configured to send the data transmission along one of the optical strands 540 of optical connection 140. As disclosed herein, inter-cluster switches 130a-b may be configured to identify a data path that will be most efficient for the data transmission based on the data transmission's final destination.

Upon receiving a data transmission along optical connection 140, the mux-demux assembly 504 of inter-cluster switches 130a-b may be configured to send the received data transmission to a TPU cluster (not shown) along an electrical connection 150. If that TPU cluster is not the final destination for the data transmission, the data transmission may be sent along to another inter-cluster switch 130, where it will be directed again to the most efficient data paths until the data transmission reaches its final destination.

Depending on the distance between inter-cluster switches 130a and 130b, different optical assemblies may be used. For example, multiple strands of multi-mode fiber may be used for relatively short distances, such as 500m or fewer. For distances on the order of 10km, multiple strands of single mode fiber may be used, while multiple strands of a single mode fiber with wavelength division multiplexing (WDM) may be used for distances of around 100km-150km. For longer distances, fiber-optic repeaters may be used. Each optical strand can be configured to support a bandwidth of around 40-80Tbps, with bandwidths up to 1.5Pbps possible.

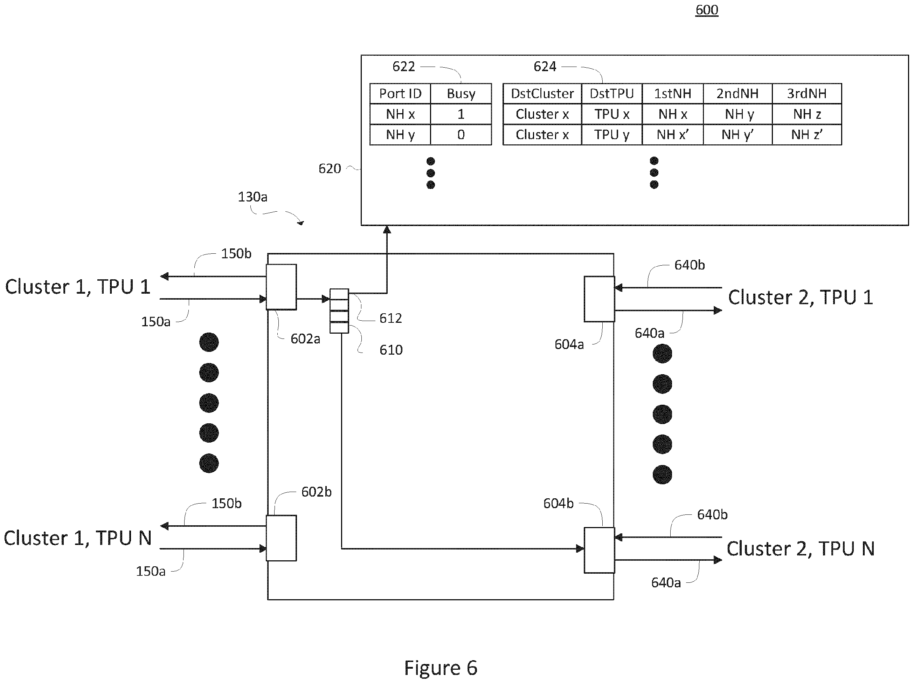

As shown in block diagram 100 of Figure 1, inter-cluster switch 130a is configured to transmit data with TPUs 112 of TPU cluster 110a via electrical connections 150. Electrical connections 150 may include a plurality of connections in which data transmissions from each TPU 112 within TPU cluster 110a is provided to a different port within inter-cluster switch 130a. For example, Figure 6 is a block diagram 600 of an inter-cluster switch 130a having a plurality of first ports, including ports 602a-b, for transmitting data with TPUs of a first TPU cluster, which is identified as TPU cluster 110a in Figure 1. Inter-cluster switch 130a of block diagram 600 also has a plurality of second ports, such as ports 604a-b, for transmitting data with TPUs of a second TPU cluster. Each port 602a-b may have electrical connections 150a and 150b for receiving and sending, respectively, data transmissions with the first TPU cluster, while each port 604a-b may have connections 640a and 640b for sending and receiving, respectively, data transmissions with the second TPU cluster via another inter-cluster switch (not shown).

In accordance with aspects of the disclosure, inter-cluster switch 130a may perform a next-hop lookup operation to identify an efficient data path for providing a data transmission toward its final destination. In addition, inter-cluster switch 130a may perform a cut-through operation for the data transmission, so that inter-cluster switch 130a begins providing a portion of the data transmission to an output port 604 prior to receiving all of the data transmission at port 602a. For example, each of the ports 602 may include a buffer that is configured to store at least a portion of a received data transmission, and this buffered data may be sent to one of ports 604 prior to the port 602 receiving all of the data transmission. As shown in block diagram 600 of Figure 6, inter-cluster switch 130 receives a data transmission via connection 150a at port 602a, which corresponds to data from a first TPU from a first TPU cluster.

As port 602a receives the data transmission, the received data may be placed into a buffer 610. In addition, inter-cluster switch 130a may be configured to access part of the received data in order to identify the destination for the data transmission. This destination information may be encoded within a portion 612 of the data transmission, such as being encoded within a header of the data transmission, and this destination information may identify the TPU cluster and specific TPU that the data transmission is to be ultimately directed. For example, the encoded data can take the form of (dstCluster, dstTPU) that represents identification data for a particular TPU cluster and a particular TPU within that cluster. In one embodiment, the "dstCluster" identifier may be 8 bits, while the "dstTPU" identifier may be 16 bits, thereby supporting identifiers for up to 256 TPU clusters, and up to 65,000 TPUs per TPU cluster. However, the size of the identifiers for the data transmission's final destination may be configured based on the network topology. The destination identifier may be placed in the first octets from the start of the message, so as to allow switch 130a to quickly identify the final destination for the data transmission.

Upon determining the destination identifier (dstCluster, dstTPU) for the data transmission, control software programs (not shown) may access a next-hop lookup table 624 that is stored in a memory 620. Next-hop lookup table 624 may include a list of all possible destinations in the form of entries for each possible (dstCluster, dstTPU) combination. In addition, for each destination entry, next-hop lookup table 624 may include a list of next-hop entries that correspond to the output ports, or data paths, that the data transmission may take as the next stop in its transmission to the identified final destination. The list of next-hop entries may be an ordered, or partially ordered, list of output ports in which the order is provided based on latency of each potential data path. For example, within next-hop lookup table 624, the final destination of (Cluster x, TPU x) has potential data paths corresponding to three different next-hops of NH x, NH y, and NH z, with NH x having the lowest latency, NH y having the second lowest latency, and NH z having the highest latency. Switch 130a may also access a port usage table 622, which may be configured to identify whether a particular port, or next-hop location associated with the port, is currently being used in connection with another data transmission. A port that is currently in used may be referred to as busy, while a port that is not in use may be referred to as available or idle.

The next-hop lookup table 624 may be relatively static over a period of time, however next-hop lookup table 624 may also be dynamically updated, so as to conform to current network conditions. For example, if a particular optical connection is subject to failure or is not achieving maximum bandwidth, the next-hop lookup table 624 can be updated so as to reflect the additional latencies associated with particular data paths.

The usage table may be configured to list all ports that are currently in use, or may be configured to provide an indication that a particular port is busy. For example, usage port usage table 622 contains a list of all ports and provides an indication for each port whether the port is busy. Within usage table 622, the port associated with NH x indicates that the port is currently busy, while the port associated with NH y indicates that the port is currently available. Thus, next-hop lookup table 624 and usage table 622 indicate that a data transmission having a final destination (Cluster x, TPU x) should be sent via the port for NH y, as port NH y is the lowest latency port that is currently available.

Once the appropriate output port 604 has been identified by inter-cluster switch 130a, it may begin to provide the data transmission to that output port 604 prior to receiving the entirety of the data transmission at the input port 602. For example, as switch 130a receives a data transmission at input port 602a, switch 130a may begin placing the data transmission into buffer 610 and may determine the final destination for the data transmission based on portion 612 of the data that is being stored in the buffer. This final destination information may then be used in connection with next-hop lookup table 624 and usage table 622 to determine that output port 604b is an available port having the lowest latency for a data transmission with the identified final destination. Switch 140a may then provide output port 604b with data from buffer 610, so that the data transmission may begin to be transmitted via the chosen data path. Transmission from port 604b may begin prior to all of the data transmission being received at input port 602a. This cut-through operation increases the overall bandwidth of switch 130a and reduces overall transmission times for inter-cluster data transmissions.

A buffer 610 may be maintained for each input port 602 of switch 130a. The size of each buffer 610 can be configured to be sufficient to store the amount of data that will be received by an input port 602 during the period of time that switch 130a will need to identify the final destination of the data transmission, as well as determine the data path that the data transmission is to take based on the identified final destination, the information provided in next-hop lookup table 624, and the port usage table 622. A next-hop lookup table 624 may identify any number of next-hop data paths. While next-hop lookup table 624 identifies three potential next-hop data paths, more or fewer data paths may be identified within next-hop lookup table 624. However, space and complexity reduction of the architecture for switch 130a may factor into the number of next-hop data paths that are maintained within next-hop lookup table 624. In the event that all identified next-hop data paths for a given final destination are determined to be currently busy, switch130a may select any idle port from the global usage table 622 and begin transmitting data via that particular port.

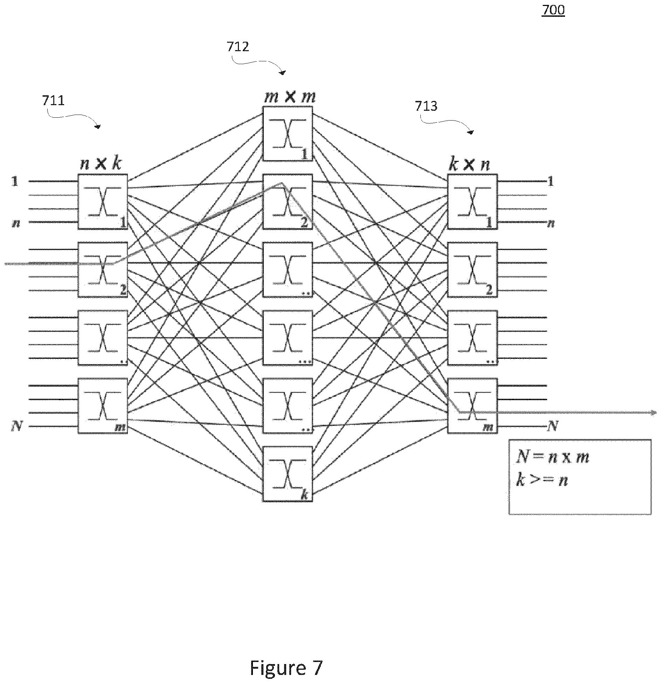

Switch 130a may be designed to have a non-blocking internal connectivity between its input ports and output ports. For example, switch 130a may have an internal fabric that allows for a (2n-1) Clos network, in which there are multiple sub-switching layers between the input ports and the output ports, allowing any input port to transmit data to any available output port without being blocked by data transmissions for other ports. The size of switch 130a, including each sub-switch may be configured based on factors such as port bandwidth, aggregate inter-switch bandwidth, and the number of sub-switches that can be placed onto a given die. Figure 7 is a block diagram 700 of a non-blocking fabric for a switch that includes three layers of sub-switches 711-713. The first layer 711 has an *m* number of nxk-sub-switches, the middle layer has a *k* number of mxm-sub-switches, and the third layer has an *m* number of kxn-sub-switches, where N is the total number of ports, where m = N/n, and where k >= n.

SerDes lanes at the switch 130 ports may be used to support full port bandwidth. In addition, the next-hop lookup, cut-through operations, and non-blocking operations described herein allow ports to maintain desired bandwidths with respect to inter-cluster data transmissions. For example, bandwidths of 800 Gbps to 1.6 Tbps or more can be maintained for ports of the inter-cluster switches 130, and an aggregate bandwidth between two inter-cluster switches 130 may be maintained around 40-80 Tbps or more, with multiple fibers being used between the two switches 130. The number of ports that a switch 130 shares with a TPU cluster 110 may be configured based on the overall bandwidth of the system and the particular bandwidth of the data path for each port within switch 130a and TPU cluster 110.

Inter-cluster switches 130 can be configured to make use of the high connectivity within a particular TPU cluster 110, in that each TPU 112 within a TPU cluster 110 can be configured to efficiently send data transmissions to every other TPU 112 within the same TPU cluster 110. Thus, inter-cluster switches 130 may be configured to send a data transmission to different output paths based on output port availability and overall latency while maintaining cut-through and non-blocking operations.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples. Further, the same reference numbers in different drawings can identify the same or similar elements.

## Claims

1. A system for distributed data processing comprising:
a plurality of tensor processing unit, TPU, clusters, each TPU cluster having a plurality of interconnected tensor processing units, TPUs;
a plurality of inter-cluster switches, wherein each inter-cluster switch is configured to transmit data between two TPU clusters from the plurality of TPU clusters;
wherein a first interconnected TPU of a first TPU cluster is configured to direct a data transmission to a second TPU that is part of a second TPU cluster, and wherein a first inter-cluster switch, from the plurality of inter-cluster switches, is configured to:
receive the data transmission;
identify TPU destination information for the data transmission;
select an available output data path, from a plurality of output data paths, based on the TPU destination information; and
while receiving the data transmission, provide a portion of the data transmission to the available output data path.

2. The system of claim 1, wherein each of the plurality of output data paths is associated with an external TPU that is part of an external TPU cluster that is different than the first TPU cluster.

3. The system of claim 1 or 2,
wherein the first inter-cluster switch is further configured to place received data from the data transmission into an input buffer, and wherein the TPU destination information is identified from the received data prior to receiving all of the data transmission; and/or
wherein the TPU destination information comprises a first set of bits identifying the second TPU cluster and a second set of bits identifying the second TPU.

4. The system of one of claims 1 to 3, wherein the first inter-cluster switch is further comprised to access a next-hop lookup that identifies a plurality of potential output paths by latency with respect to the TPU destination information.

5. The system of claim 4,
wherein the first inter-cluster switch is further comprised to select the available output data path based on identification of a potential output path from the next-hop lookup that is not currently busy; and
wherein, optionally, the first inter-cluster switch is further configured to access a data-path usage table to determine whether one or more of the plurality of potential output paths are busy, and wherein selecting the available output data path is based on the first inter-cluster switch determining that the available output data has the lowest latency of the potential output data paths that are not identified as busy within the data-path usage table.

6. The system of one of claims 1 to 5, wherein the first inter-cluster switch is further configured to have a non-blocking internal connectivity for the plurality of output data paths with respect to a plurality of input data paths.

7. The system of one of claims 1 to 6,
wherein the output path corresponds to an intermediate TPU within an intermediate TPU cluster, and wherein the data transmission is provided by the intermediate TPU cluster to a second inter-cluster switch; and
wherein the second inter-cluster switch is configured to:
receive the data transmission;
identify the TPU destination information for the data transmission;
select a second output data path, from a plurality of output data paths within the second inter-cluster switch, based on the TPU destination information; and
while receiving the data transmission, provide a portion of the data transmission to the second output data path.

8. A method for distributed data processing comprising:
directing a data transmission by a first TPU within a first TPU cluster to a second TPU within a second TPU cluster, wherein the data transmission includes TPU destination information;
receiving the data transmission at an inter-cluster switch;
identifying, by the inter-cluster switch, the TPU destination information for the data transmission;
determining, by the inter-cluster switch, an available output data path, from a plurality of output data paths, based on the TPU destination information; and
while receiving the data transmission, providing a portion of the data transmission to the available output data path.

9. The method of claim 8, wherein the available output data path is one of a plurality of output data paths, and wherein each output data path is associated with an external TPU that is part of an external TPU cluster that is different than the first TPU cluster.

10. The method of claim 8 or 9, further comprising placing, by the inter-cluster switch, received data from the data transmission into an input buffer, and wherein the TPU destination information is identified from the received data prior to receiving all of the data transmission.

11. The method of one of claims 8 to 10, wherein the TPU destination information comprises a first set of bits identifying the second TPU cluster and a second set of bits identifying the second TPU within the second TPU cluster.

12. The method of one of claims 8 to 11, wherein identifying the available output data path further comprises accessing a next-hop lookup that identifies a plurality of potential output paths by latency with respect to the TPU destination information.

13. The method of claim 12, further comprising selecting the available output data path based on identification of a potential output path from the next-hop lookup that is not currently busy; and
the method optionally further comprising accessing, by the inter-cluster switch, a data-path usage table to determine whether one or more of the plurality of potential output paths are busy, and wherein selecting the available output data path is based on the available output data having the lowest latency of the potential output data paths that are not identified as busy within the data-path usage table.

14. The method of one of claims to 8 to 13, further comprising providing, by the inter-cluster switch, the data transmission to the available data path over a plurality of non-blocking sub-switches.

15. The method of one of claims 8 to 14, wherein the output path corresponds to an intermediate TPU within an intermediate TPU cluster and the inter-cluster switch is a first inter-cluster switch, further comprising providing the data transmission, by the intermediate TPU cluster, to a second inter-cluster switch; and .
the method optionally further comprising:
receiving the data transmission at the second inter-cluster switch;
identifying, by the second inter-cluster switch, the TPU destination information for the data transmission;
selecting, by the second inter-cluster switch, a second output data path, from a plurality of output data paths within the second inter-cluster switch, based on the TPU destination information; and
while receiving the data transmission, providing, by the second inter-cluster switch, a portion of the data transmission to the second output data path.
